# FASCICULE DE BREVET EUROPEEN

(11) **EP 3 086 984 B1**
(45) Date de publication et mention de la délivrance du brevet: **17.04.2019**
(21) Numéro de dépôt: 14831021.2
(22) Date de dépôt: 23.12.2014
(51) Int. Cl.: B60R 19/36, B60R 19/18, B60R 19/34

(54) **AUGMENTATION DE LA COMPRESSIBILITE D'UNE POUTRE DE PARE-CHOC**
ERHÖHUNG DER KOMPRIMIERBARKEIT EINER STOSSFÄNGERSTANGE
INCREASE OF THE COMPRESSIBILITY OF A BUMPER BEAM

(30) Priorité: 26.12.2013 FR 1363603
(43) Date de publication de la demande: 02.11.2016
(73) Titulaire: Compagnie Plastic Omnium, 69007 Lyon (FR)
(72) Inventeur: GINJA, Stéphane, F-01500 Amberieu En Bugey (FR); PIERROT, Frédéric, F-01500 Amberieu en Bugey (FR); SEGUELA, Aurélien, F-38300 Ruy (FR)
(74) Mandataire: Remy, Vincent Noel Paul
(86) Numéro de dépôt international: PCT/FR2014/053543
(87) Numéro de publication internationale: WO 2015/097410

(56) Documents cités:
- EP-A2- 1 426 242
- GB-A- 2 344 794
- GB-A- 2 422 136

## Description

L'invention concerne le domaine technique des poutres de pare-choc pour véhicule automobile.

Dans un pare-choc de véhicule automobile, la poutre a pour rôle de répartir l'effort appliqué par un obstacle lors d'un choc, notamment lors d'un choc Danner (choc assurance réalisé à une vitesse de 15km/h), sur toute la surface avant du véhicule afin d'éviter toute concentration de contrainte sur le pare-choc et la pénétration de l'obstacle dans le pare-choc jusqu'à l'habitacle.

On sait par ailleurs qu'un pare-choc comprend un système d'absorption des chocs à basse vitesse, pour protéger le châssis et circonscrire au pare-choc la zone du véhicule endommagée par un choc. Les systèmes d'absorption comprennent un ou plusieurs absorbeurs. On trouve en particulier, à l'avant de la poutre, un absorbeur pour le choc piéton (choc jambe réalisé à une vitesse de 40 km/h) et, à l'arrière de la poutre, des absorbeurs pour le choc Danner.

Dans le cas où les absorbeurs sont au nombre de deux et sont localisés derrière la poutre, ils sont fixés aux longerons et la poutre les relie. Ces absorbeurs ayant pour but de dissiper le plus possible l'énergie mécanique résultant d'une collision du véhicule avec un obstacle, de manière à ce que l'énergie mécanique transmise au conducteur et aux éventuels passagers soient la plus faible possible et à ce que la déformation du châssis soit minimale, il est préférable de les faire participer tous deux à la dissipation de l'énergie dans le cas d'un choc avec impact frontal décalé en latéral. La poutre étant située devant les absorbeurs, elle reçoit en premier lieu l'énergie mécanique résultant du choc, puis la transmet aux deux absorbeurs. Les documents GB-2 422 136 et GB-2 344 794 divulguent des poutres de pare-choc de ce type, la poutre du document GB 2 344 794 correspondant au préambule de la revendication 1.

Dans le but d'optimiser l'absorption du choc, il est nécessaire de maximiser la course d'absorption dans la direction longitudinale du véhicule, c'est-à-dire la distance entre la face avant du pare-choc et la face arrière des absorbeurs, sur laquelle l'énergie peut être dissipée.

Or ces différentes pièces sont soumises à des contraintes géométriques, puisque la zone avant du véhicule comprend de nombreux composants qui doivent tous cohabiter, et de ce fait, il convient de limiter au maximum leur encombrement et on ne peut donc pas fournir au pare-choc une course d'absorption aussi grande que l'on souhaite.

L'invention a pour but d'augmenter la compressibilité de la poutre lors d'un choc pour augmenter la course d'absorption du pare-choc.

A cet effet, on prévoit selon l'invention une poutre de pare-choc d'un véhicule automobile comportant un châssis, ladite poutre ayant les caractéristiques de la revendication 1.

Selon un mode de réalisation, la poutre a un profil en forme de W de sorte qu'elle comprend quatre flancs horizontaux et trois flancs verticaux.

Selon un autre mode de réalisation, la poutre comprend des fibres unidirectionnelles.

En dotant les flancs horizontaux de telles fibres, on facilite leur rupture lors de l'absorption d'un choc puisqu'elles sont soumises à des efforts dont la direction est perpendiculaire à l'axe des fibres.

Selon un autre mode de réalisation, la poutre comprend des renforts bidirectionnels ou multiaxiaux dans certains au moins de ses flancs verticaux, les renforts bidirectionnels ou multiaxiaux étant choisis dans une liste comprenant : ruban, tissu, non-tissé, mat.

En combinaison avec des fibres unidirectionnelles, de tels renforts permettent d'améliorer les propriétés mécaniques des flancs verticaux de la poutre dans au moins une des directions qui n'est pas celle des fibres unidirectionnelles et d'assurer qu'ils ne se rompent pas lors de l'absorption d'un choc. Les fibres sont prises en sandwich entre deux nappes de renfort bidirectionnel ou multiaxial. Les fibres unidirectionnelles et les renforts bidirectionnels ou multiaxiaux peuvent être composés des matériaux suivants : verre, carbone, aramide.

Avantageusement, l'organe d'appui comprend plusieurs lames.

On s'assure ainsi que l'organe d'appui est bien plus résistant que les flancs horizontaux qui lui sont adjacents dans la direction de la force de réaction, et que l'effort de réaction est mieux appliqué au droit de ces flancs.

L'invention sera mieux comprise à la lecture des figures annexées, qui sont fournies à titre d'exemples et ne présentent aucun caractère limitatif, dans lesquelles :
- les figures 1 et 2 sont des vues en perspective d'une extrémité d'une poutre et de son organe d'appui selon l'invention, respectivement avant et après l'absorption d'un choc.
- les figures 3 et 4 sont des vues en section transversale de la poutre respectivement des figures 1 et 2,
- la figure 5 est un graphique illustrant l'évolution temporelle de l'effort appliqué sur une poutre dont aucun flanc horizontal ne se rompt, et
- la figure 6 est un graphique similaire à celui de la figure 5 pour une poutre dont certains des flancs horizontaux se rompent.

Dans la description qui suit, on se place dans le référentiel d'un véhicule automobile qu'on munit d'un repère cartésien R(O, x, y, z), dans lequel O est le point central du volume défini par le véhicule, l'axe (Ox) correspond à l'axe principal du véhicule et à la direction X, l'axe (Oy) correspond à la direction horizontale perpendiculaire à l'axe principal du véhicule et à la direction Y, et l'axe (Oz) est la verticale du lieu et correspond à la direction Z.

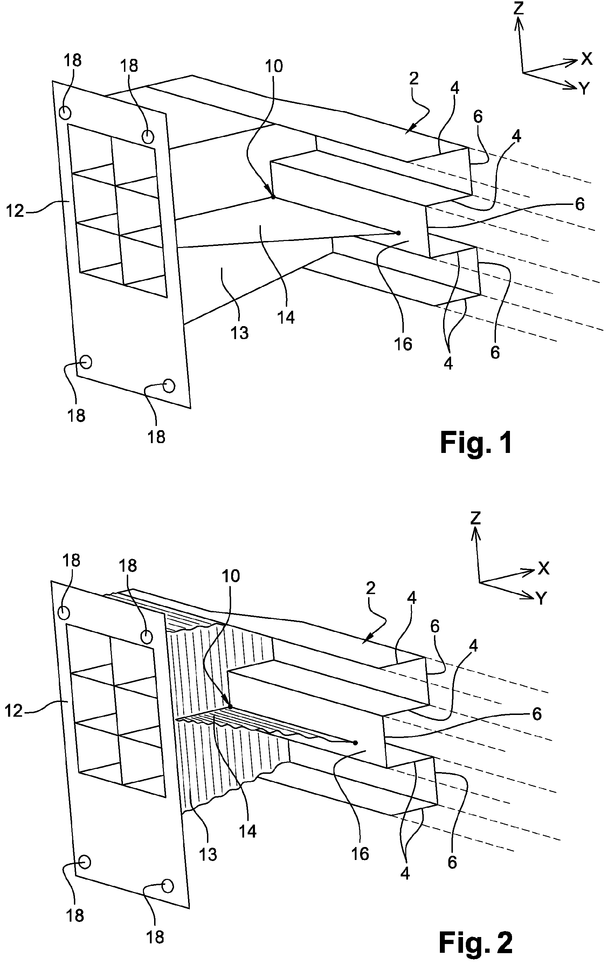

Par souci de clarté des figures 1 et 2, on y a représenté uniquement le côté gauche du pare-choc. Cependant, les deux côtés du pare-choc sont constitués exactement des mêmes pièces et se comportent de la même manière. Dans la description qui suit, on ne va donc raisonner que sur le côté gauche du pare-choc, tout en sachant qu'on peut déduire le côté droit par symétrie par rapport au plan (Oxz).

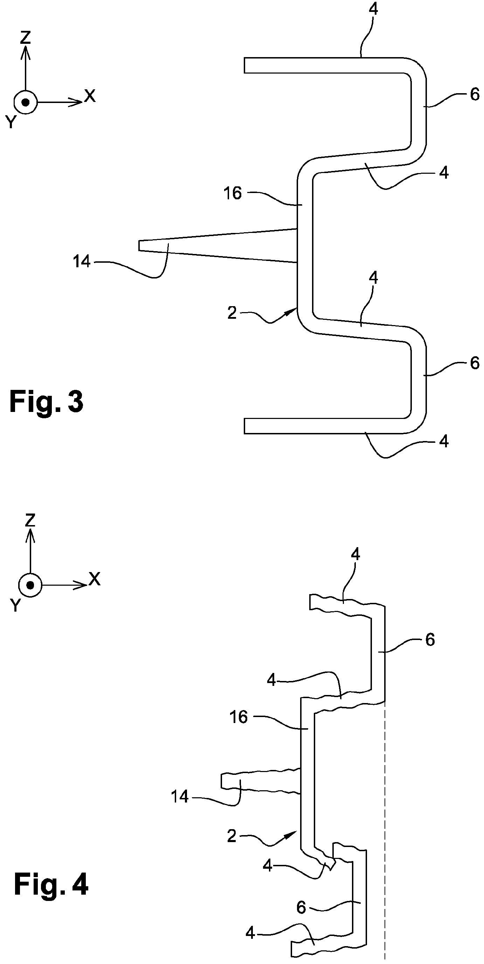

En référence aux figures 1 et 3, un pare-choc du véhicule est muni d'une poutre 2 s'étendant selon la direction Y. Cette poutre comprend quatre flancs horizontaux 4 et trois flancs verticaux 6, chacun de ces flancs comprenant des fibres unidirectionnelles, par exemple des fibres de carbone et de verre, très résistantes dans la direction de leur axe qui est confondu avec la direction Y mais considérablement moins dans toute direction perpendiculaire à leur axe. Les flancs verticaux comprennent en outre des renforts bidirectionnels, tels que du ruban, du tissu, du mat ou du non-tissé (renforts cousus), qui prennent en sandwich les fibres comprises dans ces flancs de manière à rendre ces derniers résistants à tout effort suivant la direction de l'axe principal du véhicule.

A titre d'exemple de réalisation, on peut élaborer une telle poutre par un procédé de pultrusion. Les flancs horizontaux peuvent présenter dans leur épaisseur des fibres de carbone représentant une épaisseur de 2 mm, soit 2.10⁻³ m, prises entre deux couches de fibres de verre d'épaisseur 1 mm, soit 1.10⁻³ m. Les flancs verticaux peuvent présenter dans leur épaisseur des fibres de carbone représentant une épaisseur de 1,4 mm, soit 1,4.10⁻³ m, prise entre deux couches de fibres de verre représentant une épaisseur de 0,4 mm, soit 4.10⁻⁴ m, ces trois couches de fibres étant prises en sandwich entre deux nappes de ruban présentant chacune une épaisseur de 0,4 mm, soit 4.10⁻⁴ m.

Le pare-choc est également muni d'un absorbeur 12 fixé à un longeron (non représenté) du véhicule grâce à des moyens de fixation 18, le longeron étant lui-même fixé à un châssis du véhicule qui n'est pas illustré ici. L'absorbeur est destiné à absorber un maximum d'énergie mécanique engendrée par un choc, dans le but de déformer le moins possible le châssis. L'absorbeur est surmoulé sur une extrémité de la poutre 2. Par ailleurs, une lame 14 ayant une forme globale d'équerre est solidarisée directement d'une part à une face 13 de l'absorbeur et d'autre part à un flanc 16 particulier parmi les flancs verticaux de la poutre. La lame 14 s'étend sensiblement dans un plan perpendiculaire à la direction Z et présente une faible épaisseur, par exemple inférieure à 1 cm. Une telle configuration d'une part permet à la poutre de prendre appui indirectement sur le châssis, et d'autre part permet à la lame de participer à l'absorption d'un choc. La face 13, la lame 14 et le flanc 16 constituent un organe d'appui 10.

On considère que le pare-choc est soumis à un choc avec impact frontal partiel (c'est-à-dire décalé latéralement) sur sa partie gauche. Les figures 2 et 4 illustrent l'état de la poutre 2 et de l'organe d'appui 10 respectivement avant et après l'absorption complète du choc par le véhicule. L'obstacle avec lequel le véhicule entre en collision engendre ainsi une force s'appliquant sur le pare-choc selon la direction X, dirigée vers l'arrière du véhicule. Cette force se propage en particulier jusqu'à l'organe d'appui 10, qui d'une part va en absorber en partie l'énergie grâce à l'absorbeur, et d'autre part va engendrer une force de réaction s'appliquant particulièrement sur la surface constituée par le flanc 16, dans la direction X vers l'avant du véhicule. Du fait que ce flanc est mince dans la direction de la force de réaction et comprend des renforts bidirectionnels, il ne dissipera qu'une partie infime de l'énergie du choc, et la force de réaction s'appliquera particulièrement sur les deux flancs horizontaux adjacents 4, qui se compriment alors jusqu'à leur rupture, ce qui a pour conséquence d'augmenter considérablement la course d'absorption du pare-choc. L'orientation de la lame 14 permet de localiser l'effort appliqué par la lame 14 sur le flanc 16 pour favoriser la rupture des deux flancs horizontaux adjacents 4. On voit en particulier sur la figure 4 que le flanc horizontal 4 inférieur, adjacent au flanc vertical 16 de l'organe d'appui, a rompu suite à l'absorption du choc, ce qui a permis de réduire l'incompressibilité de la poutre comme le montre le trait discontinu vertical. Ces deux flancs horizontaux 4 sont par ailleurs adjacents aux flancs verticaux 6 qui forment l'avant de la poutre 2. En d'autres termes, les flancs horizontaux 4 de la poutre 2 sur lesquels l'organe d'appui 10 exerce sa poussée est adjacent à l'avant de la poutre. On augmente donc la compressibilité de la poutre 2 à proximité de l'avant de la poutre, c'est-à-dire à proximité de la zone du pare-choc dans laquelle le choc est appliqué.

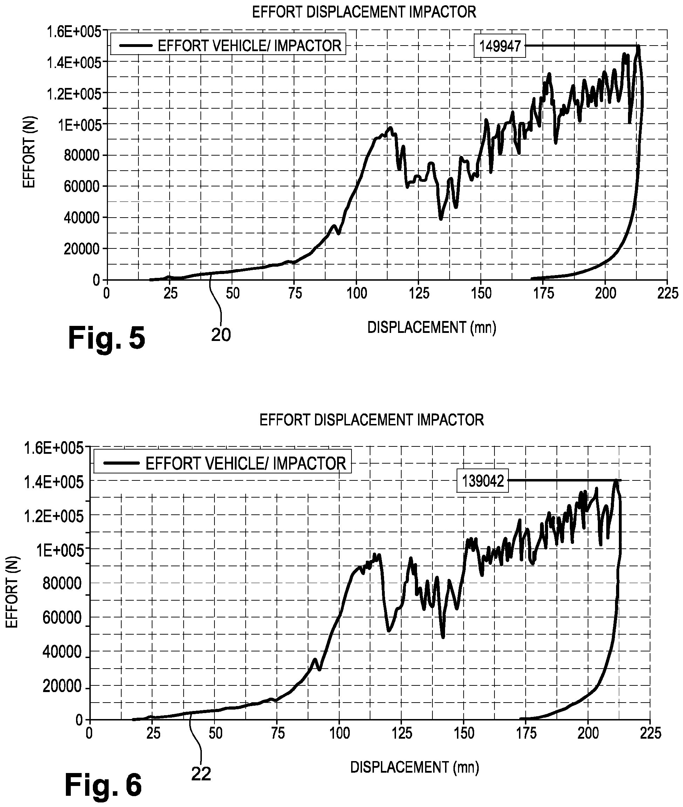

On a représenté en figures 5 et 6 l'évolution de l'effort appliqué lors d'un choc entre un obstacle et la poutre en fonction du déplacement, dans le référentiel du véhicule, d'un point de contact entre l'obstacle et le pare-choc, respectivement si aucun des flancs horizontaux ne se rompent (courbe 20) et si les deux flancs horizontaux adjacents au flanc vertical faisant partie de l'organe d'appui se rompent (courbe 22). Les deux chocs sont simulés sous les mêmes conditions expérimentales. Ainsi, les aires sous chacune de ces deux courbes, qui représentent l'énergie mécanique totale dissipée, sont égales.

Une caractéristique essentielle du pare-choc est l'effort maximal qui lui est soumis lors de l'absorption du choc. On remarque que la valeur que prend cet effort maximal d'une part est atteinte à un déplacement d'environ 215 mm, soit 2,15.10⁻¹ m, et d'autre part qu'elle est différente suivant qu'il y ait rupture ou non de la poutre. On lit sur la courbe 20 qu'elle vaut environ 1,5.10⁵ N si les flancs horizontaux ne se rompent pas, et sur la courbe 22 qu'elle vaut environ 1,4.10⁵ N si l'organe d'appui rompt les deux flancs horizontaux qui lui sont adjacents. Cela représente une différence de 1.10⁴ N entre les deux cas, ce qui n'est pas une valeur négligeable. Si la poutre se rompt localement, il y a donc moins d'efforts transmis au châssis, qui se déforme alors beaucoup moins, et à l'habitacle abritant le conducteur et d'éventuels passagers.

Bien entendu, on pourra apporter à l'invention de nombreuses modifications sans sortir du cadre de celle-ci.

La poutre peut présenter un profil différent de celui qui a été décrit précédemment.

Les différents flancs peuvent comporter des matériaux autres que ceux qui été décrits dans ce qui précède. En particulier, les flancs horizontaux peuvent comprendre des renforts bidirectionnels, mais moins que les flancs verticaux de manière à ce que ces derniers restent plus résistants que les flancs horizontaux dans la direction de l'effort appliqué lors d'un choc.

Les épaisseurs et la répartition des épaisseurs dans les flancs peuvent être différentes de celles décrites dans ce qui précède.

On peut remplacer la lame par une pluralité de lames et on peut prévoir que ces lames appuient directement sur les flancs horizontaux à rompre.

L'absorbeur peut être solidarisé au châssis.

## Revendications

1. Poutre (2) de pare-choc d'un véhicule automobile comportant un châssis, ladite poutre comprenant au moins un flanc horizontal (4) et au moins un flanc vertical (6) s'étendant longitudinalement à la poutre, ainsi qu'au moins un organe d'appui (10) apte à être agencé de manière à prendre appui sur le châssis et exercer une force de réaction dans une direction sur ledit au moins un flanc horizontal lors de l'absorption d'un choc par ladite poutre, ledit organe d'appui étant plus résistant que ledit au moins un flanc horizontal dans la direction de la force de réaction, l'organe d'appui comprenant une face d'un absorbeur (12) agencé pour prendre appui sur le châssis, l'organe d'appui comprenant un second flanc vertical (16) de la poutre adjacent au flanc horizontal, **caractérisée en ce que** l'organe d'appui comprend une lame (14), globalement en forme d'équerre, solidarisée directement d'une part à la face de l'absorbeur (12) et d'autre part au second flanc vertical (16).

2. Poutre selon la revendication précédente, ayant un profil en forme de W de sorte qu'elle comprend quatre flancs horizontaux et trois flancs verticaux.

3. Poutre selon au moins l'une quelconque des revendications précédentes, dans laquelle la poutre comprend des fibres unidirectionnelles.

4. Poutre selon au moins l'une quelconque des revendications précédentes, dans laquelle la poutre comprend des renforts bidirectionnels ou multiaxiaux dans certains au moins de ses flancs verticaux, les renforts bidirectionnels ou multiaxiaux étant choisis dans une liste comprenant : ruban, tissu, non-tissé, mat.

5. Poutre selon au moins l'une quelconque des revendications précédentes, dans laquelle l'organe d'appui comprend plusieurs lames.

## Patentansprüche

1. Stoßfängerstange (2) für ein Kraftfahrzeug aufweisend eine Rahmenstruktur, wobei die Stange mindestens eine horizontale Flanke (4) und mindestens eine vertikale Flanke (6), die sich in Längsrichtung zu der Stange erstreckt, umfasst, sowie mindestens ein Abstützorgan (10), das in der Lage ist, so angeordnet zu werden, dass es sich auf der Rahmenstruktur abstützt und dass es eine Reaktionskraft in einer Richtung auf die mindestens eine horizontale Flanke (4) bei der Dämpfung eines Aufpralls durch die Stange ausübt, wobei das Abstützorgan widerstandsfähiger ist als die mindestens eine horizontale Flanke in der Richtung der Reaktionskraft, wobei das Abstützorgan eine Seite eines Stoßdämpfers (12) umfasst, der so angeordnet ist, dass er sich auf der Rahmenstruktur abstützt, wobei das Abstützorgan eine zweite vertikale Flanke (16) der Stange angrenzend an die horizontale Flanke umfasst, **dadurch gekennzeichnet, dass** das Abstützorgan eine Zunge (14), allgemein in Form eines Winkels, umfasst, die einerseits mit der Seite des Stoßdämpfers (12) und andererseits mit der zweiten vertikalen Flanke (16) unmittelbar fest verbunden ist.

2. Stange nach dem vorhergehenden Anspruch, die ein W-förmiges Profil aufweist, derart, dass sie vier horizontale Flanken und drei vertikale Flanken umfasst.

3. Stange nach mindestens einem der vorhergehenden Ansprüche, wobei die Stange unidirektionale Fasern umfasst.

4. Stange nach mindestens einem der vorhergehenden Ansprüche, wobei die Stange bidirektionale oder multiaxiale Verstärkungen in mindestens bestimmten ihrer vertikalen Flanken umfasst, wobei die bidirektionalen oder multiaxialen Verstärkungen aus einer Liste ausgewählt sind, umfassend: Band, Gewebe, Vlies, Matte.

5. Stange nach mindestens einem der vorhergehenden Ansprüche, wobei das Abstützorgan mehrere Zungen umfasst.

## Claims

1. Bumper beam (2) of a motor vehicle comprising a chassis, said beam comprising at least one horizontal flank (4) and at least one vertical flank (6) extending longitudinally to the beam, and at least one bearing member (10) able to be arranged so as to be supported on the chassis and to exert a reaction force in one direction on said at least one horizontal flank during the absorption of an impact by said beam, said bearing member being stronger than said at least one horizontal flank in the direction of the reaction force, the bearing member comprising a side of an absorber (12) arranged so as to be supported on the chassis, the bearing member comprising a second vertical flank (16) of the beam adjacent to the horizontal flank, **characterized in that** the bearing member comprises a blade (14), having generally the shape of a square, directly fastened firstly to the side of the absorber and secondly to the second vertical flank (16).

2. Beam according to the preceding claim, having a W-shaped profile such that it comprises four horizontal flanks and three vertical flanks.

3. Beam according to at least any one of the preceding claims, wherein the beam comprises unidirectional fibres.

4. Beam according to at least any one of the preceding claims, wherein the beam comprises bidirectional or multiaxial reinforcements in at least some of its vertical flanks, the bidirectional or multiaxial reinforcements being selected from a list comprising: ribbon, fabric, non-woven, mat.

5. Beam according to at least any one of the preceding claims, wherein the bearing member comprises several blades.
